# EUROPÄISCHE PATENTSCHRIFT

(11) **EP 2 977 253 B1**
(45) Veröffentlichungstag und Bekanntmachung des Hinweises auf die Patenterteilung: **11.09.2019**
(21) Anmeldenummer: 15175175.7
(22) Anmeldetag: 03.07.2015
(51) Int. Cl.: B60K 28/06

(54) **STARTMECHANISMUS FÜR EIN KRAFTFAHRZEUG**
STARTING MECHANISM FOR A MOTOR VEHICLE
MECANISME DE DEMARRAGE POUR UN VEHICULE AUTOMOBILE

(30) Priorität: 21.07.2014 DE 102014214099
(43) Veröffentlichungstag der Anmeldung: 27.01.2016
(73) Patentinhaber: Ford Global Technologies, LLC, Dearborn, MI 48126 (US)
(72) Erfinder: Mathissen, Marcel, 52146 Würselen (DE); Vogt, Rainer, 52072 Aachen (DE); Lindner, Hans-Joachim, 53881 Euskirchen (DE)
(74) Vertreter: Dörfler, Thomas

(56) Entgegenhaltungen:
- EP-A1- 2 054 840
- EP-A2- 2 040 208
- DE-A1- 2 339 424
- US-A1- 2010 274 411
- US-A1- 2011 032 096

## Beschreibung

Die Erfindung betrifft einen Startmechanismus für ein Kraftfahrzeug mit einem Zündmechanismus, einem programmierbaren Zündschlüssel und einem Detektor für Alkohol und/oder Drogen, wobei der Zündmechanismus eingerichtet ist, um vom Zündschlüssel gestartet zu werden, wenn der Detektor für Alkohol und/oder Drogen ein Ergebnis unterhalb eines Grenzwerts liefert.

Es ist allgemein bekannt Kraftfahrzeuge mit Alkohol- und Drogendetektoren auszurüsten, um den Betrieb durch einen untauglichen Fahrer zu verhindern.

So offenbart z.B. die EP 1 601 548 B1 einen Startmechanismus für ein Kraftfahrzeug mit einem Schlüssel und einer separaten externen Analyseeinheit, wobei das Fahrzeug mit dem Schlüssel sich nur starten lässt, wenn der Alkohol- oder Drogengehalt der untersuchten Probe unterhalb einer vorgegebenen Grenze liegt.

Dies stellt sicher, dass sowohl der Schlüssel vorhanden als auch der Alkohol- bzw. Drogentest negativ ausfällt.

Aus der DE 60 2004 013 379 T2 ist ein System zum Starten eines Autos bekannt, wobei das System einen ersten Schlüssel, durch den eine Tür des Autos geöffnet und eine Zündung des Autos betätigt werden kann, einen zweiten Schlüssel und eine Wegfahrsperre des Autos umfasst, die eine Meldung vom Vorhandensein des ersten Schlüssels empfängt, der in die Zündung eingeführt wurde, und die ein Starten des Autos verhindert, bevor ein OK-Signal von dem zweiten Schlüssel empfangen wurde, wobei der Alkoholspiegel eines Fahrers des Autos durch den zweiten Schlüssel bestimmt wird und ein OK-Signal von dem zweiten Schlüssel der Wegfahrsperre nur dann übermittelt wird, wenn der Alkoholspiegel unter einem vorgegebenen Wert liegt, wobei die Wegfahrsperre dann, wenn der zweite Schlüssel das OK-Signal übermittelt hat, ein Betätigen der Zündung auf die übliche Weise vermittels des ersten Schlüssels erlaubt. Die US 2001/0032096 zeigt einen Startmechanismus mit programmierbarem Zündschlüssel und Alkoholdetektor.

Es besteht jedoch nach wie vor der Wunsch nach Startmechanismen, die eine flexiblere Handhabung erlauben, z.B. im Notfall den Start erlauben oder nicht von Jedem einen Alkohol- bzw. Drogentest abverlangen.

Aufgabe der Erfindung ist es daher einen alternativen Startmechanismus bereitzustellen, der variabel einstellbar ist hinsichtlich der Durchführung eines Alkohol- bzw. Drogentests.

Diese Aufgabe wird durch den in Anspruch 1 wiedergegebenen Startmechanismus gelöst.

Erfindungsgemäß ist erkannt worden, dass wenn mittels des programmierbaren Zündschlüssels der Detektor für Alkohol und/oder Drogen deaktiviert und den Start des Zündmechanismus erlaubt wird, wenn der programmierbare Zündschlüssel eine entsprechende einstellbare auslesbare Kennung besitzt, es möglich ist, mindestens zwei Arten von Zündschlüsseln bereitzustellen, nämlich solche ohne Einschränkung und solche mit Einschränkung.

Mit anderen Worten, es gibt quasi Administrator-Zündschlüssel, deren Benutzer alle Rechte besitzen, also auch ohne Alkohol- oder Drogentest fahren darf. Daneben gibt es Zündschlüssel mit beschränkten Rechten, deren Benutzer also nur nach bestandenem Alkohol- oder Drogentest fahren dürfen. Das Fahrzeug ist also für den normalen Benutzer mit eingeschränktem Zündschlüssel ohne Alkohol- oder Drogentest bzw. Verbleib unterhalb des vorgegebenen Grenzwerts bei der Messung nicht nutzbar.

Die Festlegung der Rechte des Schlüsselinhabers erfolgt in einer Datenbank in der Steuereinheit im Kraftfahrzeug. Es wird also anhand der Kennung des jeweiligen Zündschlüssels in der Datenbank überprüft, ob der Zündschlüssel die Berechtigung hat, den Zündmechanismus zu starten (oder nicht).

Der Administrator-Zündschlüssel kann noch weitere uneingeschränkte Rechte aufweisen, wie die Kontrolle der Log-Dateien, Einstellen der Grenzwerte, maximaler Geschwindigkeiten etc. Mit anderen Worten, es können mittels des Administrator-Zündschlüssels in der Datenbank entsprechende Rechte, Einstellungen etc. hinterlegt werden.

Denkbar ist jedoch auch, dass die Kennung einstellbar ist, so dass über die Kennung selber die Rechte und ggf. weitere Einstellungen im Schlüssel gespeichert sind. Dies hat den Nachteil, dass der Zündschlüssel zur Änderung physikalisch vorliegen muss, aber den Vorteil, dass ggf. auf die Datenbank in der Steuereinheit verzichtet werden könnte.

Der Detektor für Alkohol und/oder Drogen ist ein externer mobiler Detektor Dies hat den Vorteil, dass eine einfache Handhabung bei der jährlichen Kalibrierung etc. möglich ist und nicht das komplette Fahrzeug in die Werkstatt gebracht werden muss. Der Detektor für Alkohol und/oder Drogen ist über ein intelligentes Mobiltelefon mit dem Startmechanismus verbunden. Es wird dann quasi eine App verwendet, die Ihre Daten an das Fahrzeug drahtlos übergibt, z.B. mittels Bluetooth etc. Alternativ kann der Detektor auch in das Fahrzeug integriert sein.

Unter Drogen werden hier alle legalen und illegalen Mittel verstanden, die die Fahrtüchtigkeit beeinträchtigen können. Drogen im Sinne dieser Erfindung sind demnach auch legal erhältliche Medikamente, wenn diese allein oder in Kombination mit anderen Mitteln und/oder Faktoren die Fahrtüchtigkeit beeinträchtigen.

Sinnvollerweise kann der Zündmechanismus über eine Notstartvorrichtung verfügen, die für den Notfall ein Umgehen des Grenzwerts oder des Alkohol- bzw. Drogentests insgesamt erlaubt. Somit ist sichergestellt, dass auch im Notfall das Fahrzeug bewegt werden kann. Dazu kann je nach Ausgestaltung auch vorgesehen sein, dass dem Fahrzeug nur eine niedrige Höchstgeschwindigkeit vorgegeben wird (durch den Administrator-Zündschlüssel Benutzer). Diese kann auch abhängig von den gemessenen Werten aus dem Alkohol- bzw. Drogentest erfolgen, so dass trotz Notfall und kleiner Alkoholisierung eine langsame Fahrt möglich wäre.

Zudem kann an den Inhaber des uneingeschränkten Zündschlüssels eine entsprechende Nachricht per SMS etc. geschickt und ein entsprechender Log-Dateieintrag vorgenommen werden, um Missbrauch zu verhindern.

In einer weiteren Ausführungsform ist eine biometrische Erkennungseinheit vorhanden. Somit kann zusätzlich zum Zündschlüssel die Erkennung der Identität des Fahrers durchgeführt werden. Dazu kann die biometrische Erkennungseinheit von einem intelligenten Mobiltelefon, welches mit dem Startmechanismus verbunden ist, gebildet sein. Es kann also wiederum eine entsprechende App verwendet werden.

Wenn der Zündmechanismus eingerichtet ist, um für eine vorgebbare Zeitdauer gesperrt zu werden, kann bei positivem Alkohol- bzw. Drogentest das Fahrzeug für eine vorgegebene Zeitdauer gesperrt werden, bis zu erwarten ist, dass der Alkohol bzw. die Drogen ihre Wirkung verloren haben.

Weitere Merkmale und Einzelheiten der Erfindung ergeben sich aus der nachfolgenden Beschreibung der Zeichnung. Es zeigen:
Fig. 1 ein schematisches Blockdiagram einer Ausführungsform des Startmechanismus;
Fig. 2 ein schematisches Blockdiagram einer Variante des Startmechanismus mit einem Mobiltelefon;
Fig. 3 ein schematisches Blockdiagram einer weiteren Variante des Startmechanismus mit einem Mobiltelefon und
Fig. 4 ein schematisches Flussdiagram des Ablaufs der Alkohol- bzw. Drogenüberprüfung und der Fahrzeugfreigabe mit einem Startmechanismus gemäß Figur 1.

In den Figuren ist ein als Ganzes mit 1 bezeichneter Startmechanismus eines PKW dargestellt.

Es umfasst eine zentrale Steuerung 2, die mit der Motorzündung zu dessen Start verbunden ist.

Die Motorzündung M ist dazu mittels eines programmierbaren Zündschlüssels 3 "bedienbar". Der Zündschlüssel 3 ist dabei, wie bei modernen Fahrzeugen üblich, drahtlos mittels eines Transceivers 4 erkennbar und auslesbar.

Über eine gespeicherte Datenbank 5 kann die Steuerung 2 den Zündschlüssel überprüfen bzw. dessen Rechte auslesen.

Zusätzlich ist eine biometrische Erkennungseinheit 7 vorgesehen, die mittels Gesichtserkennung den Fahrer identifiziert.

Über ein angeschlossenes Display 8, kann ein Mensch-Maschine-Interface bereitgestellt und ggf. über Touchfunktionen bedient werden.

Zusätzlich ist ein mobiler Alkohol- und Drogendetektor 6 über den Transceiver 4 an der Steuerung angebunden, um den entsprechenden Test durchzuführen bzw. Messwerte zu liefern.

An der Steuerung 2 ist ebenfalls ein Freigabemodul 9 angeschlossen, das je nach Ergebnis der Zündschlüssel- und Alkohol- bzw. Drogenprüfung die eigentliche Zündung freigibt oder sperrt.

Parallel ist ein Notsystem 10 an dem Freigabemodul 9 angeschlossen, um dieses trotz negativer Alkohol- bzw. Drogenprüfung umgehen zu können.

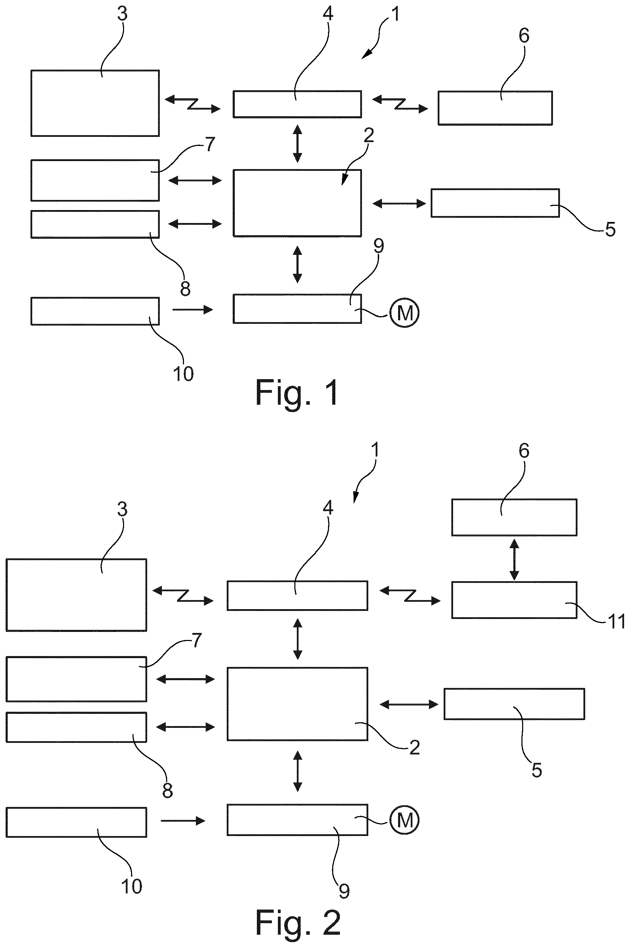

Die in Figur 2 gezeigte Variante unterscheidet sich von der gerade beschriebenen darin, dass der mobile Alkohol- und Drogendetektor 6 über ein Mobiltelefon 11 mit dem Transceiver 4 verbunden ist. Somit kann der Alkohol- und Drogendetektor 6 das Mobiltelefon 11 als Schnittstelle verwenden und kann entsprechend einfach aufgebaut sein.

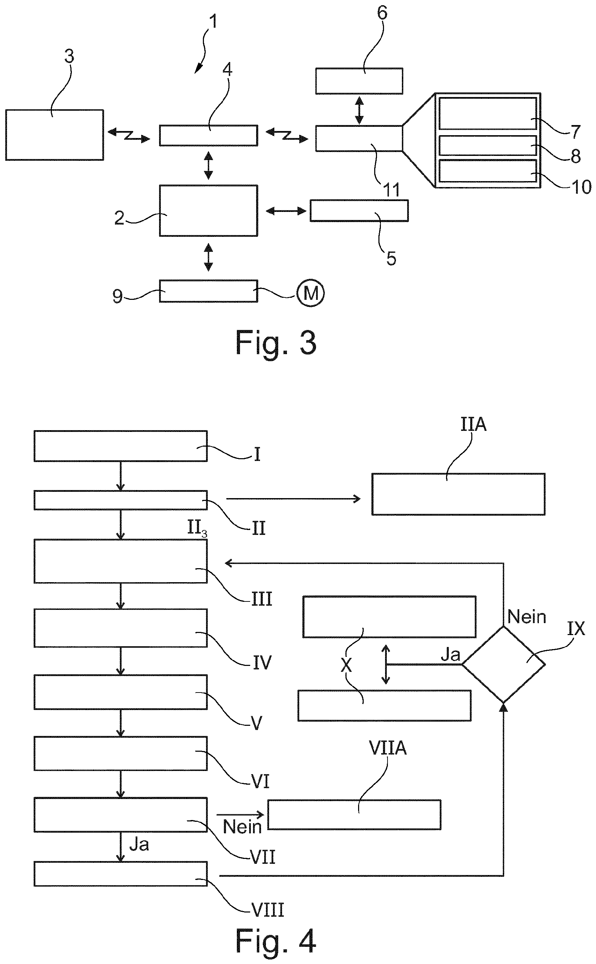

In der weiteren Variante nach Figur 3 sind sogar weitere Funktionen in das Mobiltelefon 11 als Programm (App) integriert worden. So dient dieses nun ebenfalls als biometrische Erkennungseinheit 7 (Kamera des Mobiltelefons) und Display 8 (Display des Mobiltelefons) sowie als Notsystem 10.

Mit Bezug zu Figur 4 wird ein beispielhafter Ablauf einer Zündungsfreigabe erläutert.

Nähert sich der Fahrer mit Zündschlüssel 3 dem Fahrzeug, so wird der Schlüssel 3 vom Transceiver 4 ausgelesen (Schritt I) und in der Steuerung 2 mit der Datenbank 5 verglichen, um die Rechte zu bestimmen (Schritt II).

Handelt es sich um einen Zündschlüssel 3 ohne beschränkende Kennung, gibt es keine Restriktionen (Schritt IIA) und der Benutzer kann das Fahrzeug uneingeschränkt verwenden (Freigabe 9 aktiviert).

Handelt es sich dagegen um einen Zündschlüssel 3 mit beschränkender Kennung (Schritt IIB) ist der Alkohol- und Drogentest zwingend (Schritt III). Optional kann noch die Identität mittels Biometrik 7 überprüft werden.

Entsprechend wird die Zündung des Motors M zunächst durch die Freigabe 9 nicht aktiviert und das Mobiltelefon 11 aktiviert (Schritt IV).

Dieses wiederum aktiviert den mobilen Detektor 6 (Schritt V), der seine Messwerte bestimmt und über das Mobiltelefon an die Steuerung 2 weiterleitet (Schritt VI).

Die Steuerung 2 vergleicht die Messwerte mit vorgegebenen Grenzwerten (Schritt VII) und gibt entweder die Zündung über das Freigabemodul 9 frei (Schritt VIIA), wenn der Grenzwert unterschritten wird, oder blockiert weiterhin die Zündung und startet einen Countdown (Schritt VIII), wenn der Grenzwert überschritten wird.

Anschließend wird überprüft, ob das Notsystem 10 aktiviert wurde. Ist dies nicht der Fall, kann der Benutzer erst nach Ablauf des Countdowns wieder im Schritt III den Test durchführen.

Wurde dagegen das Notsystem 10 aktiviert wird die Zündung im Sicherheitsmodus mit verringerter Geschwindigkeit freigegeben und die Verwendung des Notsystems protokolliert (Schritt X).

## Patentansprüche

1. Startmechanismus für ein Kraftfahrzeug mit einem Zündmechanismus, einem programmierbaren Zündschlüssel und einem Detektor für Alkohol und/oder Drogen, wobei der Zündmechanismus eingerichtet ist, um vom Zündschlüssel gestartet zu werden, wenn der Detektor für Alkohol und/oder Drogen ein Ergebnis unterhalb eines Grenzwerts liefert, wobei mittels des programmierbaren Zündschlüssels der Detektor für Alkohol und/oder Drogen deaktiviert und den Start des Zündmechanismus erlaubt wird, wenn der programmierbare Zündschlüssel eine entsprechende einstellbare auslesbare Kennung besitzt, **dadurch gekennzeichnet, dass** der Detektor für Alkohol und/oder Drogen ein externer mobiler Detektor ist und über ein intelligentes Mobiltelefon mit dem Startmechanismus verbunden ist.

2. Startmechanismus nach einem der vorhergehenden Ansprüche, **dadurch gekennzeichnet, dass** der Zündmechanismus über eine Notstartvorrichtung verfügt.

3. Startmechanismus nach einem der vorhergehenden Ansprüche, **dadurch gekennzeichnet, dass** eine biometrische Erkennungseinheit vorhanden ist.

4. Startmechanismus nach Anspruch 3, **dadurch gekennzeichnet, dass** die biometrische Erkennungseinheit von einem intelligenten Mobiltelefon, welches mit dem Startmechanismus verbunden ist, gebildet ist.

5. Startmechanismus nach einem der vorhergehenden Ansprüche, **dadurch gekennzeichnet, dass** der Zündmechanismus eingerichtet ist, um für eine vorgebbare Zeitdauer gesperrt zu werden.

## Claims

1. Starting mechanism for a motor vehicle having an ignition mechanism, a programmable ignition key and a detector for alcohol and/or drugs, wherein the ignition mechanism is designed in order to be started by the ignition key when the detector for alcohol and/or drugs delivers a result below a limit value, wherein the detector for alcohol and/or drugs is deactivated by means of the programmable ignition key and the starting of the ignition mechanism is enabled when the programmable ignition key has a corresponding adjustable readable identifier, **characterized in that** the detector for alcohol and/or drugs is an external mobile detector and is connected to the starting mechanism via an intelligent mobile telephone.

2. Starting mechanism according to one of the preceding claims, **characterized in that** the ignition mechanism has an emergency starting apparatus.

3. Starting mechanism according to either of the preceding claims, **characterized in that** a biometric identification unit is provided.

4. Starting mechanism according to Claim 3, **characterized in that** the biometric identification unit is formed by an intelligent mobile telephone which is connected to the starting mechanism.

5. Starting mechanism according to one of the preceding claims, **characterized in that** the ignition mechanism is designed in order to be blocked for a prespecifiable time period.

## Revendications

1. Mécanisme de démarrage pour un véhicule automobile comprenant un mécanisme d'allumage, une clé de contact programmable et un détecteur d'alcool et/ou de drogues, dans lequel le mécanisme d'allumage est conçu pour être démarré par la clé de contact lorsque le détecteur d'alcool et/ou de drogues fournit un résultat inférieur à une valeur limite, dans lequel le détecteur d'alcool et/ou de drogues est désactivé au moyen de la clé de contact programmable et le démarrage du mécanisme d'allumage est autorisé si la clé de contact programmable possède une identification lisible et réglable correspondante,
**caractérisé en ce que** le détecteur d'alcool et/ou de drogues est un détecteur mobile externe et est connecté au mécanisme de démarrage par l'intermédiaire d'un téléphone mobile intelligent.

2. Mécanisme de démarrage selon l'une des revendications précédentes, **caractérisé en ce que** le mécanisme d'allumage comporte un dispositif de démarrage d'urgence.

3. Mécanisme de démarrage selon l'une des revendications précédentes, **caractérisé en ce qu'**une unité de reconnaissance biométrique est présente.

4. Mécanisme de démarrage selon la revendication 3, **caractérisé en ce que** l'unité de reconnaissance biométrique est constituée par un téléphone mobile intelligent connecté au mécanisme de démarrage.

5. Mécanisme de démarrage selon l'une des revendications précédentes, **caractérisé en ce que** le mécanisme d'allumage est conçu pour être bloqué pendant une durée prédéfinissable.
